# EUROPÄISCHE PATENTSCHRIFT

(11) **EP 3 714 004 B1**
(45) Veröffentlichungstag und Bekanntmachung des Hinweises auf die Patenterteilung: **04.10.2023**
(21) Anmeldenummer: 18804008.3
(22) Anmeldetag: 22.11.2018
(51) Int. Cl.: C08L 77/02, C08G 69/36

(54) **POLYAMID-ZUSAMMENSETZUNG FÜR DIE HERSTELLUNG SCHWEISSBARER FORMKÖRPER**
POLYAMID COMPOSITION FOR THE MANUFACTURE OF WELDABLE MOLDED ARTICLES
COMPOSITION DE POLYAMIDE DESTINÉE À LA FABRICATION D'ARTICLES MOULÉS SOUDABLES

(30) Priorität: 23.11.2017 EP 17203368
(43) Veröffentlichungstag der Anmeldung: 30.09.2020
(73) Patentinhaber: BASF SE, 67069 Ludwigshafen am Rhein (DE)
(72) Erfinder: WAGNER, Sebastian, 67056 Ludwigshafen (DE); MOCHEV, Stefan, 67056 Ludwigshafen (DE); ROTH, Michael, 67056 Ludwigshafen (DE)
(74) Vertreter: BASF IP Association
(86) Internationale Anmeldenummer: PCT/EP2018/082201
(87) Internationale Veröffentlichungsnummer: WO 2019/101851

(56) Entgegenhaltungen:
- EP-A1- 3 034 554
- EP-A2- 1 041 109
- WO-A1-2016/202577
- US-A1- 2017 137 622

## Beschreibung

Die Erfindung betrifft eine Polyamid-Zusammensetzung, die zur Herstellung geschweißter Formkörper geeignet ist, Verfahren zu ihrer Herstellung und ihre Verwendung sowie Verfahren zur Erhöhung der Schweißnahtfestigkeit nach Wärmealterung von aus Polyamid-Zusammensetzungen hergestellten Formkörpern.

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid 6 (Polycaprolactam, PA 6) und das Polyamid 66 (Nylon, Polyhexamethylenadipinsäureamid, PA 66) die am meisten hergestellten Polymere. Die meisten technisch bedeutsamen Polyamide sind teilkristalline thermoplastische Polymere, die sich durch eine hohe Temperaturbeständigkeit auszeichnen.

Formkörper aus Polyamiden können beispielsweise durch Verschweißen, wie Reibungsschwei-ßen, Heißgasschweißen oder Laserdurchstrahlschweißen, hergestellt werden.

EP-B-1 060 216 betrifft eine Polyamid-Zusammensetzung für reibungsschweißbare Formkörper, wobei die Zusammensetzung (A) 100 Gewichtsteile eines Polyamidgemischs aus (a) Polyamid 6 und (b) einem aliphatischen Polyamidcopolymer und/oder einem aliphatischen Polyamidterpolymer, wobei das Gewichtsverhältnis von (a) zu (b) gleich 95 : 5 bis 50 : 50 ist, und (B) 10 bis 100 Gewichtsteile eines anorganischen Verstärkungsmittels, bezogen auf das Gewicht des Polyamidgemischs, aufweist. Zusätzlich werden bevorzugt 0,1 bis 6 Gewichtsteile eines Weichmachers mitverwendet. Beim Weichmacher handelt es sich um niedermolekulare Poly(ethylenglykol)ester, die keine freien Hydroxylgruppen oder Carboxylgruppen aufweisen, und um langkettige Alkylpolyester, die eine endständige Carboxylgruppe und eine endständige Hydroxylgruppe aufweisen. Bevorzugte Weichmacher sind 2-Ethylhexansäure-terminierte (N=9) Poly(ethylenglykol)ester und langkettige Alkylpolyester. Als Copolymer wird ein Polyamid 66/6-Copolymer oder ein Polyamid 6/66/610-Terpolymer eingesetzt.

Ferner ist es aus WO 2010/014801 bekannt, wärmebeständige Polyamidformkörper herzustellen, bei denen dem Polyamid mehrwertige Alkohole, wie Pentaerythrit, Dipentaerythrit, Tripentaerythrit, Di-Trimethylolpropan, D-Mannit, D-Sorbit oder Xylit, beigemischt werden. Auch Polyamidmischungen können eingesetzt werden. Gemäß den Ausführungsbeispielen enthalten die Polyamidmischungen einen größeren Anteil eines zumindest teilaromatischen Polyamids und einen geringeren Anteil eines aliphatischen Polyamids.

Die aus den Polyamiden hergestellten Formkörper sollen auch nach längerer Wärmealterung bei hohen Temperaturen gute mechanische Eigenschaften aufweisen.

Die DE-A-10 2017 100 932 betrifft hydroxyfunktionelle dentritische Polymere als Haftvermittler. Diese Dendrimere, die eine Vielzahl von endständigen Hydroxylgruppen aufweisen, werden als Haftvermittler unter anderem für Polyamide eingesetzt, um die Haftkraft für einen Klebstoff, insbesondere einen Isocyanatgruppen aufweisenden Klebstoff, auf der Oberfläche zu erhöhen.

WO 2016/202577 A1 betrifft Polyamid-Zusammensetzungen mit hohem Schmelzfluss und guten mechanischen Eigenschaften. Die Polyamid-Formmassen enthalten neben Polyamid Polyesterpolyole und gegebenenfalls Verstärkungsstoffe und weitere Additive. Gemäß Beispiel 1 kann die Zusammensetzung 1 Gew.-% des mehrwertigen Alkohols PEOL A enthalten, wobei es sich um einen Polyetherpolyol handelt, der auf mit Ethylenoxid und Propylenoxid alkoxyliertem Toluoldiamin basiert.

US 2017/0137622 A1 betrifft Polyamidharz-Zusammensetzungen und diese enthaltende Formkörper. Die Polyamidharz-Zusammensetzungen können neben Polyamid 6 und einem Polyetheramidelastomer Pentaerythrit in einer Menge von 0,8 Gew.-% enthalten.

Aufgabe der vorliegenden Erfindung ist die Bereitstellung von Polyamidzusammensetzungen, die zur Herstellung verschweißter Formkörper geeignet sind, welche eine erhöhte Schweißnahtfestigkeit nach Wärmealterung zeigen.

Die Aufgabe wird erfindungsgemäß gelöst durch eine Polyamid-Zusammensetzung, enthaltend
a) 30 bis 99,9 Gew.-% einer Polyamid-Mischung als Komponente A) aus aliphatischem Polyamid A1) und aliphatischem Copolyamid A2), wobei das Gewichtsverhältnis von A1) zu A2) 55 : 45 bis 95 : 5 beträgt,
b) 0 bis 60 Gew.-% Glasfasern als Komponente B),
c) 0 bis 2 Gew.-% Nigrosin als Komponente C),
d) 0,1 bis 10 Gew.-% mindestens eines mehrwertigen Alkohols mit mehr als zwei Hydroxylgruppen und einem Zahlenmittel des Molekulargewichts (Mₙ) von weniger als 2000, ausgewählt aus Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2`-Hydroxyethoxy)propan-1,2-diol, 3-(2'-Hydroxypropoxy)propan-1,2-diol, 2-(2'-Hydroxyethoxy)-hexan-1,2-diol, 6-(2'-Hydroxypropoxy)hexan-1,2-diol, 1,1,1-tris-[(2`-Hydroxyethoxy)methyl]ethan, 1,1,1-tris-[(2`-Hydroxypropoxy)methyl]propan, 1,1,1-tris-(4`-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate, Trimethylolpropanpropoxylate, Pentaerythrit, Dipentaerythrit, Tripentaerythrit, Cyclodextrin, D-Mannose, Glucose, Galactose, Sucrose, Fructose, Xylose, Arabinose, D-Mannit, D-Sorbit, D- oder L-Arabit, Xylit, Idit, Talit, Allit, Altrit, Guilit, Erythrit, Threit und D-Gulon-γ-lacton, als Komponente D),
e) 0 bis 20 Gew.-% weitere Zusatzstoffe als Komponente E),
wobei sich die Mengenangaben, deren Summe 100 Gew.-% ergibt, auf die gesamte Zusammensetzung beziehen, das aliphatische Polyamid A1) ausgewählt ist aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und das aliphatische Copolyamid A2) aufgebaut ist aus den Monomeren von zwei oder drei Polyamiden, ausgewählt aus PA 4, PA 5, PA 6, PA 7, PA 8, PA 9, PA 10, PA 11, PA 12, PA46, PA 66, PA 69, PA 610, PA 612, PA 96, PA 99, PA910, PA912, PA 1212.

Die Aufgabe wird zudem gelöst durch ein Verfahren zur Herstellung der Polyamid-Zusammensetzung durch Vermischen der Inhaltsstoffe unter Erwärmung auf eine Temperatur im Bereich von 160 bis 340 °C.

Die Aufgabe wird zudem gelöst durch Verwendung der Polyamid-Zusammensetzungen zur Herstellung von schweißbaren Formteilen oder geschweißten Formkörpern sowie durch schweißbare Formteile oder geschweißte Formkörper aus dieser Polyamid-Zusammensetzung.

Die Aufgabe wird zudem gelöst durch die Verwendung von mehrwertigen Alkoholen mit mehr als zwei Hydroxylgruppen und einem Zahlenmittel des Molekulargewichts (Mₙ) von weniger als 2000 in Polyamid-Zusammensetzungen, die mindestens ein Polyamid, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und mindestens ein Copolyamid, aufgebaut aus den Monomeren von zwei oder drei Polyamiden, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, enthalten, zur Erhöhung der Schweißnahtfestigkeit nach Wärmealterung von durch Verschweißen mindestens zweier Formteile aus der Polyamid-Zusammensetzung hergestellten Formkörpern.

Die Aufgabe wird zudem gelöst durch ein Verfahren zur Erhöhung der Schweißnahtfestigkeit nach Wärmealterung von aus Polyamid-Zusammensetzungen, die mindestens ein Polyamid, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und mindestens ein Copolyamid, aufgebaut aus den Monomeren von zwei oder drei Polyamiden, ausgewählt aus PA 4, PA 5, PA 6, PA 7, PA8, PA 9, PA 10, PA 11, PA 12, PA46, PA 66, PA 69, PA 610, PA 612, PA 96, PA 99, PA 910, PA 912, PA 1212, enthalten, durch Verschweißen mindestens zweier Formteile hergestellten Formkörpern, bei dem man der Polyamid-Zusammensetzung vor dem Herstellen der Formteile und Formkörper 0,1 bis 10 Gew.-%, bezogen auf die gesamte Polyamid-Zusammensetzung, mindestens eines mehrwertigen Alkohols mit mehr als zwei Hydroxylgruppen und einem Zahlmittel des Molekulargewichts (Mₙ) von weniger als 2000, ausgewählt aus Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2`-Hydroxyethoxy)propan-1,2-diol, 3-(2'-Hydroxypropoxy)propan-1,2-diol, 2-(2`-Hydroxyethoxy)-hexan-1,2-diol, 6-(2`-Hydroxypropoxy)hexan-1,2-diol, 1,1,1-tris-[(2`-Hydroxyethoxy)methyl]ethan, 1,1,1-tris-[(2`-Hydroxypropoxy)methyl]propan, 1,1,1-tris-(4'-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate, Trimethylolpropanpropoxylate, Pentaerythrit, Dipentaerythrit, Tripentaerythrit, Cyclodextrin, D-Mannose, Glucose, Galactose, Sucrose, Fructose, Xylose, Arabinose, D-Mannit, D-Sorbit, D- oder L-Arabit, Xylit, Idit, Talit, Allit, Altrit, Guilit, Erythrit, Threit und D-Gulon-γ-lacton, zusetzt.

Es wurde erfindungsgemäß gefunden, dass eine Kombination aus aliphatischem Polyamid A1) und aliphatischem Copolyamid A2) mit einem mehrwertigen Alkohol der Komponente D) zu Polyamid-Zusammensetzungen führt, aus denen vorteilhafte verschweißte Formkörper hergestellt werden können, in denen die Bruchdehnung oder Zugfestigkeit auch nach längerer Wärmebehandlung bei hohen Temperaturen erhalten bleibt, beispielsweise bei einer Temperaturbehandlung bei 180 °C für 500 Stunden.

Beim Einsatz eines (aliphatischen) Polyamids oder einer Polyamidmischung aus (aliphatischem) Polyamid und Copolyamid werden oft unzureichende mechanische Eigenschaften für einen Formkörper erhalten, die sich durch Wärmealterung nochmals deutlich verschlechtern.

Durch Einsatz von mehrwertigen Alkoholen in Polyamid-Zusammensetzungen verschlechtern sich typischerweise die mechanischen Eigenschaften, insbesondere bei geschweißten Formkörpern. Dies ist zum einen auf einen chemischen Abbau des Basispolymers durch den Alkohol zurückzuführen (Reduktion der Viskositätszahl), zum anderen neigen kurzkettige Alkohole bei bestimmten Konzentrationen und Kombinationen zu Migration.

Erst durch Kombination von Polyamiden mit Copolyamiden und mehrwertigen Alkoholen werden Polyamid-Zusammensetzungen erhalten, die gute mechanische Eigenschaften zeigen, die auch bei längerer Wärmealterung nicht zu stark nachlassen. Zudem zeigen geschweißte Formkörper eine hohe Bruchdehnung vor und nach Wärmealterung. Diese Effekte treten insbesondere bei einer Kombination von aliphatischem Polyamid mit aliphatischem Copolyamid auf.

Durch Zusatz von Nigrosin können die mechanischen Eigenschaften nochmals verbessert werden, da Nigrosin die Kristallisation stört und damit verlangsamt.

Die erfindungsgemäßen Polyamid-Zusammensetzungen enthalten 30 bis 99,9 Gew.-%, vorzugsweise 40 bis 99,5 Gew.-%, insbesondere 50 bis 98,5 Gew.-% der Komponente A).

Sie enthalten zudem 0 bis 60 Gew.-%, vorzugsweise 0 bis 40 Gew.-%, insbesondere 0 bis 30 Gew.-% der Komponente B). Sofern Komponente B) vorliegt, beträgt die Mindestmenge vorzugsweise 5 Gew.-%, besonders bevorzugt mindestens 10 Gew.-%, insbesondere mindestens 15 Gew.-%. In diesem Fall ergeben sich Bereiche von 5 bis 60 Gew.-%, vorzugsweise 10 bis 40 Gew.-%, besonders bevorzugt 15 bis 30 Gew.-% der Komponente B).

Komponente C) wird in einer Menge von 0 bis 2 Gew.-%, vorzugsweise 0 bis 1 Gew.-%, besonders bevorzugt 0 bis 0,5 Gew.-% eingesetzt. Sofern Komponente C) mitverwendet wird, beträgt die Untergrenze vorzugsweise 0,1 Gew.-%, besonders bevorzugt 0,15 Gew.-%, insbesondere 0,2 Gew.-%. In diesem Fall ergeben sich somit Mengenbereiche von 0,1 bis 2 Gew.-%, vorzugsweise 0,15 bis 1 Gew.-%, besonders bevorzugt 0,2 bis 0,5 Gew.-%.

Die Komponente D) wird in einer Menge von 0,1 bis 10 Gew.-%, vorzugsweise 0,5 bis 5 Gew.-%, insbesondere 1,5 bis 3 Gew.-% eingesetzt.

Komponente E) wird in einer Menge von 0 bis 20 Gew.-%, vorzugsweise 0 bis 10 Gew.-%, insbesondere 0 bis 5 Gew.-% eingesetzt. Sofern Komponente E) mitverwendet wird, beträgt die Untergrenze vorzugsweise 0,1 Gew.-%, besonders bevorzugt mindestens 0,2 Gew.-%, insbesondere mindestens 0,3 Gew.-%. In diesem Fall ergeben sich Bereiche von 0,1 bis 20 Gew.-%, vorzugsweise 0,2 bis 10 Gew.-%, besonders bevorzugt 0,3 bis 5 Gew.-%, insbesondere 0,3 bis 2 Gew.%.

Beim Vorliegen der Komponenten B), C) und/oder E) verringert sich die maximale Menge der Komponente A) entsprechend um die Mindestmengen der jeweiligen Komponenten bzw. die Summe dieser Mindestmengen. Beim Vorliegen der Komponente B) in einer Mindestmenge von 5 Gew.-% erniedrigt sich damit beispielsweise die Maximalmenge der Komponente A) auf 94,9 Gew.-%.

Liegen zusätzlich die Mindestmengen an Komponenten C) und E) von jeweils 0,1 Gew.-% vor, verringert sich die Maximalmenge der Komponente A) entsprechend auf 94,7 Gew.-%. Bei den anderen Mengenbereichen wird entsprechend verfahren, so dass sich die Gesamtmenge der Komponenten A) bis E) immer auf 100 Gew.-% ergänzt.

Die vorliegende Erfindung betrifft spezielle Polyamid-Zusammensetzungen, die auf aliphatischen Polyamiden und Copolyamiden basiert. Zudem betrifft die Erfindung allgemein die Verwendung von mehrwertigen Alkoholen der Komponente D) in Polyamid-Zusammensetzungen, die mindestens ein Polyamid und mindestens ein Copolyamid enthalten. Nachfolgend werden für die Verwendung und das Verfahren geeignete Polyamide allgemein als synthetische Polyamide der Komponente A) beschrieben. Dabei werden sowohl Polyamide als auch Copolyamide beschrieben. Anschließend werden die in den Polyamid-Zusammensetzungen enthaltenen aliphatischen (Co)Polyamide beschreiben.

Die erfindungsgemäße Polyamid-Zusammensetzung, enthält als Komponente A1 und A2 wenigstens ein synthetisches Polyamid. Der Begriff "synthetisches Polyamid" wird im Rahmen der Erfindung breit verstanden. Er erfasst ganz allgemein Polymere, die wenigstens eine zur Polyamidbildung geeignete Komponente eingebaut enthalten, die ausgewählt ist unter Dicarbonsäuren, Diaminen, Salzen aus wenigstens einer Dicarbonsäure und wenigstens einem Diamin, Lactamen, ω-Aminosäuren, Aminocarbonsäurenitrilen und Mischungen davon. Neben den zur Polyamidbildung geeigneten Komponenten können die erfindungsgemäßen synthetischen Polyamide auch damit copolymerisierbare Monomere einpolymerisiert enthalten. Der Begriff "synthetisches Polyamid" umfasst keine natürlichen Polyamide, wie Peptide und Proteine, z. B. Haare, Wolle, Seide und Eiweiß.

Zur Bezeichnung der Polyamide werden im Rahmen der Erfindung zum Teil fachübliche Kurzzeichen verwendet, die aus den Buchstaben PA sowie darauffolgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B.

PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet:
T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte, geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aliphatischen Dicarbonsäuren, cycloaliphatischen Dicarbonsäuren, aromatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, insbesondere Monomethylester, Dimethylester, Monoethylester oder Diethylester, vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkyl-komponenten, insbesondere Methylethylester, vor.

Bevorzugt sind die zur Polyamidbildung geeigneten Komponenten ausgewählt unter
pA) unsubstituierten oder substituierten aromatischen Dicarbonsäuren und Derivaten von unsubstituierten oder substituierten aromatischen Dicarbonsäuren,
pB) unsubstituierten oder substituierten aromatischen Diaminen,
pC) aliphatischen oder cycloaliphatischen Dicarbonsäuren,
pD) aliphatischen oder cycloaliphatischen Diaminen,
pE) Monocarbonsäuren,
pF) Monoaminen,
pG) mindestens dreiwertigen Aminen,
pH) Lactamen,
pl) ω-Aminosäuren,
pK) von pA) bis pI) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten pC) oder pD) vorhanden sein muss und keine der Komponenten pA) und pB) vorhanden sein darf. Für aliphatische Polyamide vom Typ PA Z (wie PA 6 oder PA 12) gilt die Maßgabe, dass mindestens die Komponente pH) vorhanden sein muss.

Eine weitere geeignete Ausführungsform sind teilaromatische Polyamide. Für teilaromatische Polyamide gilt die Maßgabe, dass mindestens eine der Komponenten pA) oder pB) und mindestens eine der Komponenten pC) oder pD) vorhanden sein muss.

Die aromatischen Dicarbonsäuren pA) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren pA) weisen vorzugsweise wenigstens einen (z. B. 1, 2, 3 oder 4) C₁-C₄-Alkylrest auf. Insbesondere weisen substituierte aromatischen Dicarbonsäuren pA) 1 oder 2 C₁-C₄-Alkylreste auf. Diese sind vorzugsweise ausgewählt unter Methyl, Ethyl, n-Propyl, Isopropyl, n-Butyl, iso-Butyl, sec-Butyl und tert-Butyl, besonders bevorzugt Methyl, Ethyl und n-Butyl, insbesondere Methyl und Ethyl und speziell Methyl. Substituierte aromatische Dicarbonsäuren pA) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure pA) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfo-isophthalsäure.

Besonders bevorzugt wird als aromatische Dicarbonsäure pA) Terephthalsäure, Isophthalsäure oder ein Gemisch aus Terephthalsäure und Isophthalsäure eingesetzt.

Bevorzugt weisen die teilaromatischen Polyamide einen Anteil von aromatischen Dicarbonsäuren an allen Dicarbonsäuren von wenigstens 50 mol%, besonders bevorzugt von 70 mol% bis 100 mol%, auf. In einer speziellen Ausführungsform weisen die teilaromatischen Polyamide einen Anteil an Terephthalsäure oder Isophthalsäure oder einem Gemisch aus Terephthalsäure und Isophthalsäure bezogen auf alle Dicarbonsäuren von wenigstens 50 mol%, bevorzugt von 70 mol% bis 100 mol%, auf.

Die aromatischen Diamine pB) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren pC) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine pD) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin pD) ausgewählt unter Hexamethylendiamin, 2-Methylpentamethylendiamin, Octamethylendiamin, Nonamethylendiamin, 2-Methyl-1,8-octamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin pD) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin pD) ausschließlich Hexamethylendiamin einpolymerisiert.

In einer weiteren speziellen Ausführung enthalten die teilaromatischen Polyamide als Diamin pD) ausschließlich Bis-(4-aminocyclohexyl)-methan einpolymerisiert.

In einer weiteren speziellen Ausführung enthalten die teilaromatischen Polyamide als Diamin pD) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin pD) ausschließlich Isophorondiamin (IPDA) einpolymerisiert.

Die aliphatischen und die teilaromatischen Polyamide können wenigstens eine Monocarbonsäure pE) einpolymerisiert enthalten. Die Monocarbonsäuren pE) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren pE) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Rizinus und Sonnenblume, Acrylsäure, Methacrylsäure, Versatic^{®}-Säuren, Koch^{®}-Säuren und Mischungen davon.

Werden als Monocarbonsäuren pE) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure pE) ausgewählt unter Essigsäure, Propionsäure, Benzoesäure und Mischungen davon.

In einer speziellen Ausführung enthalten die aliphatischen und die teilaromatischen Polyamide als Monocarbonsäure pE) ausschließlich Propionsäure einpolymerisiert.

In einer weiteren speziellen Ausführung enthalten die aliphatischen und die teilaromatischen Polyamide als Monocarbonsäure pE) ausschließlich Benzoesäure einpolymerisiert.

In einer weiteren speziellen Ausführung enthalten die aliphatischen und die teilaromatischen Polyamide als Monocarbonsäure pE) ausschließlich Essigsäure einpolymerisiert.

Die aliphatischen und die teilaromatischen Polyamide können wenigstens ein Monoamin pF) einpolymerisiert enthalten. Dabei enthalten die aliphatischen Polyamide nur aliphatische Monoamine oder alicyclische Monoamine einpolymerisiert. Die Monoamine pF) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine pF) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide kann zusätzlich wenigstens ein mindestens dreiwertiges Amin pG) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)-methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine pG) eingesetzt.

Geeignete Lactame pH) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren pl) sind 6-Aminocapronsäure, 7-Aminoheptansäure, 11-Aminoundecansäure, 12-Aminododecansäure und Mischungen davon.

Geeignete von pA) bis pl) verschiedene, damit cokondensierbare Verbindungen pK) sind wenigstens dreiwertige Carbonsäuren, Diaminocarbonsäuren, etc.

Geeignete Verbindungen pK) sind weiterhin 4-[(Z)-N-(6-Aminohexyl)-C-hydroxy-carbonimido-yl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)-methyl]-C-hydroxy-carbonimidoyl]benzoesäure, 3-[(Z)-N-[(5-Amino-1,3,3-trimethyl-cyclohexyl)-methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

Bevorzugt ist das Polyamid A ausgewählt unter PA 4, PA 5, PA 6, PA 7, PA 8, PA 9, PA 10, PA 11, PA 12,PA 46, PA 66, PA 666, PA 69, PA 610, PA 612, PA 96, PA 99, PA 910, PA 912, PA 1212, PA 6.T, PA 9.T, PA8.T, PA 10.T, PA 12.T, PA 6.I, PA 8.I, PA 9.I, PA 10.1, PA 12.1, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.1 0, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDAT/MXDAI, PA 6.T/6.I/MACM.T/MACM.I, PA 6.T/6.I/PACM.T/PACM.I, PA 6.1710.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

In einer bevorzugten Ausführungsform enthält die erfindungsgemäße Polyamid-Zusammensetzung als Komponente A) wenigstens ein aliphatisches Polyamid A1.

Das aliphatische Polyamid ist dann vorzugsweise ausgewählt ist unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere ist das aliphatische Polyamid A1 ausgewählt unter PA 6, PA 66 oder PA 12. Eine spezielle Ausführungsform sind Polyamid-Zusammensetzungen, bei denen die Komponente A) PA 66 enthält oder aus PA 66 besteht.

Ein teilaromatisches Polyamid bzw. Copolyamid ist vorzugsweise ausgewählt ist unter PA 6.T, PA 9.T, PA 10.T, PA 12.T, PA 6.I, PA 9.I, PA 10.1, PA 12.1, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Die folgenden Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde beispielsweise PMMA als Polymerstandard mit einer niedrigen Polydispersität eingesetzt.

Das synthetische Polyamid, z. B. A1 bzw. A2, weist vorzugsweise ein zahlenmittleres Molekulargewicht Mₙ in einem Bereich von 8000 bis 50000 g/mol, besonders bevorzugt von 10000 bis 35000 g/mol auf.

Das synthetische Polyamid A, z. B. A1 bzw. A2, weist vorzugsweise ein gewichtsmittleres Molekulargewicht Mₙ in einem Bereich von 15000 bis 200000 g/mol, besonders bevorzugt von 20000 bis 125000 g/mol auf.

Die Polyamide, z. B. A1 bzw. A2, weisen vorzugsweise eine Polydispersität PD (= M_{w}/Mₙ) von höchstens 6, besonders bevorzugt von höchstens 5, insbesondere von höchstens 3,5, auf.

In den erfindungsgemäßen Polyamid-Zusammensetzungen liegen hingegen in der Polyamid-mischung A) aliphatisches Polyamid A1) und aliphatisches Copolyamid A2) vor. Die entsprechenden Komponenten können aus den vorstehend aufgeführten Komponenten ausgewählt sein.

Das aliphatische Polyamid A1) ist ausgewählt aus: PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

Besonders bevorzugt ist das aliphatische Polyamid A1) ausgewählt aus Polyamid 6, Polyamid 66 und Gemischen davon.

Das aliphatische Copolyamid A2 ist aufgebaut aus den Monomeren von zwei oder drei Polyamiden, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

Spezifische Beispiele von Copolyamiden sind PA 66/6, PA 66/68, PA 66/610, PA 66/612, PA 66/10, PA 66/12, PA 6/68, PA 6/610, PA 6/612, PA 6/10, PA 6/12. Beispiele geeigneter Terpolymere sind PA 6/66/610, PA 6/66/69, PA 6/66/11, PA 6/66/12, PA 6/610/11, PA 6/610/12, 6/66/PACM.

Bevorzugt ist das aliphatische Copolyamid ein PA 6/PA 66-Copolymer.

Geeignete aliphatische Polyamide und Copolyamide sind zudem in EP-B-1 060 216 genannt.

Das Gewichtsverhältnis von aliphatischem Polyamid A1) zu aliphatischem Copolyamid A2) beträgt 55 : 45 bis 95 : 5, vorzugsweise 60 : 40 bis 90 : 10, insbesondere 70 : 30 bis 90 : 10.

Vorzugsweise sollte der Kristallisationspunkt (Kristallisationstemperatur) der Polyamidmischung A) unter den Kristallisationspunkten (Kristallisationstemperaturen) des aliphatischen Polyamids A1) und des aliphatischen Copolyamids A2) liegen. Auch bei der erfindungsgemäßen Verwendung und dem erfindungsgemäßen Verfahren sollte vorzugsweise der Kristallisationspunkt der Mischung aus dem mindestens einen Polyamid und mindestens einem Copolyamid unter den Kristallisationspunkten des mindestens einen Polyamids und mindestens einen Copolyamids liegen.

Damit hat der Zusatz des Copolyamids vorzugsweise einen den Kristallisationspunkt vermindernden Effekt in der Polyamid-Zusammensetzung. Die Verminderung oder Senkung des Kristallisationspunktes kann dabei mittels DSC-Messung (differentiating scanning calorimetry) ermittelt werden.

Durch Kombination des Copolyamids mit dem optionalen Nigrosin-Zusatz kann die Kristallisationstemperatur in der Polyamid-Zusammensetzung nochmals abgesenkt werden.

Als Komponente B) enthalten die erfindungsgemäßen Polyamid-Zusammensetzungen gegebenenfalls Glasfasern. Beim Vorliegen von Glasfasern verringert sich die maximal zulässige Menge der Komponente A) um die minimal vorliegende Glasfasermenge.

Speziell werden Schnittglasfasern eingesetzt. Insbesondere umfasst die Komponente B) Glasfasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"- oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d.h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern, oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Als Komponente C) enthalten die erfindungsgemäßen Polyamid-Zusammensetzungen gegebenenfalls Nigrosin.

Nigrosin (Solvent Black 7 - CAS: 8005-02-5) ist ein tiefschwarzer organischer Farbstoff.

Nigrosin ist eine Mischung aus synthetischen schwarzen Farbmitteln und wird durch Erhitzen von Nitrobenzol, Anilin und Anilinhydrochlorid in der Gegenwart eines Eisen- oder Kupfer-Katalysators gewonnen. Nigrosine treten in verschiedenen Ausführungen auf (wasserlöslich, alkohollöslich und öllöslich). Ein typisches wasserlösliches Nigrosin ist Acid Black 2 (C.I. 50420), ein typisches alkohollösliches Nigrosin ist Solvent Black 5 (C.I. 50415), und ein typisches öllösliches Nigrosin ist Solvent Black 7 (C.I. 50415:1).

Nigrosin ist jedoch im Hinblick auf eine möglicherweise gesundheitsschädliche Wirkung nicht unbedenklich. So können z. B. herstellungsbedingt Reste von Anilin und Nitrobenzol im Produkt verbleiben, und es besteht die Gefahr der Entstehung von unerwünschten Zersetzungsprodukten bei der nachfolgenden Verarbeitung mittels Extrusionsverfahren oder Spritzgussverfahren oder Spinnverfahren.

Der Zusatz von Nigrosin in den erfindungsgemäßen Polyamid-Zusammensetzungen kann die Kristallisationsneigung der Polyamid-Zusammensetzung nochmals vermindern, da Nigrosin die Kristallisation stört. Der Zusatz führt somit zu einer langsameren Kristallisation bzw. zur Absenkung der Kristallisationstemperatur.

Als Komponente D) wird mindestens ein mehrwertiger Alkohol mit mehr als zwei Hydroxylgruppen und einem Zahlenmittel des Molekulargewichts (Mn) von weniger als 2000 eingesetzt. Entsprechende Polyole sind beispielsweise in WO 2010/014801 beschrieben, siehe dort insbesondere Seite 14, Zeile 29 bis Seite 16, Zeile 7. Das Zahlenmittel des Molekulargewichts wird damit vorzugsweise durch Gelpermeationschromatographie (GPC) bestimmt.

Geeignete mehrwertige Alkohole sind Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2'-Hydroxyethoxy)propan-1,2-diol, 3-(2`-Hydroxypropoxy)propan-1,2-diol, 2-(2'-Hydroxyethoxy)-hexan-1,2-diol, 6-(2`-Hydroxypropoxy)hexan-1,2-diol, 1,1,1-tris-[(2`-Hydroxyethoxy)methyl]ethan, 1,1,1-tris-[(2`-Hydroxypropoxy)methyl]propan, 1,1,1-tris-(4`-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate oder Trimethylolpropanpropoxylate, Pentaerythrit, Dipentaerythrit und Tripentaerythrit, Cyclodextrin, D-Mannose, Glucose, Galactose, Sucrose, Fructose, Xylose, Arabinose, D-Mannit, D-Sorbit, D- oder L-Arabit, Xylit, Idit, Talit, Allit, Altrit, Guilit, Erythrit, Threit und D-Gulon-γ-lacton.

In bevorzugten mehrwertigen Alkoholen sind die Hydroxylgruppen jeweils an Kohlenstoffatome gebunden, die voneinander durch mindestens ein Atom, vorzugsweise Kohlenstoffatom, getrennt sind. Entsprechend ist der mehrwertige Alkohol vorzugsweise Pentaerythrit, Dipentaerythrit, Tripentaerythrit, Trimethylolpropan, D-Mannit, D-Sorbit oder Xylit. Besonders bevorzugt ist der mehrwertige Alkohol Dipentaerythrit und/oder Tripentaerythrit. Am meisten bevorzugt ist Dipentaerythrit.

Als Komponente E) können die Polyamid-Zusammensetzungen weitere Zusatzstoffe enthalten. Bei Mitverwendung der Komponente E) verringert sich die Obergrenze der Komponente A) entsprechend.

Als Komponente E) enthalten die erfindungsgemäßen Zusammensetzungen 0 bis 20 Gew.-%, vorzugsweise 0 bis 10 Gew.-%, insbesondere 0 bis 5 Gew.-% weiterer Zusatzstoffe. Bei der Mitverwendung derartiger Zusatzstoffe beträgt die Mindestmenge 0,1 Gew.-%, vorzugsweise 1 Gew.-%, insbesondere 3 Gew.-%.

Bei Mitverwendung der Komponente E) vermindert sich die Obergrenze der Komponente A) entsprechend. Bei einer Mindestmenge von 0,1 Gew.-% der Komponente E) beträgt so beispielsweise die Obergrenze der Menge der Komponente A) 89,8f Gew.-%.

Als weitere Zusatzstoffe kommen von Glasfasern verschiedene Füll- und Verstärkungsstoffe, von Komponente A) verschiedene thermoplastische Polymere oder weitere Additive in Betracht.

Der Begriff "Füllstoff und Verstärkungsstoff" (= mögliche Komponente E)) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Kohlenstofffasern, Aramidfasern, Borfasern, Metallfasern oder Kaliumtitanatfasern.

Die von Komponente A) verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid;
- Homo- und Copolymeren von Vinylacetalen,
- Polyvinylestern,
- Polyvinylpyrrolidon bzw. Polyvinylpyrrolidon Copolymere (PVP)
- Polycarbonaten (PC),
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- thermoplastischen Polyurethanen (TPU),
- Polysulfiden,
- Polysulfonen,
- Polyethersulfonen,
- Cellulosealkylestern
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Es kann vorteilhaft sein, Solvent Black 28 (CAS Nr. 12237-23-91) einzusetzen und gegebenenfalls mit wenigstens einem weiteren Farbmittel zu kombinieren. Die Komponente E) ist dann vorzugsweise ausgewählt unter von C) verschiedenen nicht nukleierenden Farbmitteln. Dazu zählen nicht nukleierende Farbstoffe, nicht nukleierende Pigmente und Mischungen davon. Beispiele für nicht nukleierende Farbstoffe sind Solvent Yellow 21 (im Handel als Oracet^{®} Yellow 160 FA von der Firma BASF SE erhältlich) oder Solvent Blue 104 (im Handel als Solvaperm^{®} Blue 2B von der Firma Clariant erhältlich). Beispiele für nicht nukleierende Pigmente sind Pigment Brown 24 (im Handel als Sicotan^{®} Yellow K 2011 FG von der Firma BASF SE erhältlich). Auch kommen als Komponente E) geringe Mengen wenigstens eines Weißpigments in Frage. Geeignete Weißpigmente sind Titandioxid (Pigment White 6), Bariumsulfat (Pigment White 22), Zinksulfid (Pigment White 7) etc. In einer speziellen Ausführung enthält die erfindungsgemäße Formmasse als Komponente E) 0,001 bis 0,5 Gew.-% wenigstens eines Weißpigments. Beispielsweise kann die Formmasse 0,05 Gew.-% Titandioxid der Marke Kronos 2220 der Firma Kronos enthalten.

Die Art und Menge der Zugabe richtet sich nach dem Farbton, d. h. der gewünschten Nuance des Schwarztones. Zum Beispiel kann mit Solvent Yellow 21 der Farbton des Schwarztones im CIELAB-Farbenraum von beispielsweise b* = -1,0 in Richtung +b*, also in Richtung Gelb verschoben werden. Dem Fachmann ist diese Methode als Farbnuancierung bekannt. Die Messung erfolgt nach DIN 6174 "Farbmetrische Bestimmung von Farbmaßzahlen und Farbabständen im angenähert gleichförmigen CIELAB-Farbenraum" bzw. der Nachfolgenorm.

Als Komponente E) kann auch Ruß mitverwendet werden. Beispielsweise enthalten die erfindungsgemäßen Zusammensetzungen 0,01 bis 1 Gew.-%, vorzugsweise 0,03 bis 0,5 Gew.-%, insbesondere 0,05 bis 0,3 Gew.-%, Ruß. Ruß (Carbon Black), auch als Industrieruß bezeichnet, ist eine Modifikation des Kohlenstoffs mit hohem Oberfläche-zu-Volumen-Verhältnis und besteht zu 80 bis 99,5 Gew.-% aus Kohlenstoff. Die spezifische Oberfläche von Industrieruß beträgt etwa 10 bis 1500 m²/g (BET). Der Ruß kann als Gasruß, Furnaceruß, Flammruß, Spaltruß oder Acetylenruß hergestellt sein. Der Korndurchmesser liegt im Bereich von 8 bis 500 nm, typischerweise 8 bis 110 nm. Ruß wird auch als Pigment Black 7 oder Lamp Black 6 bezeichnet. Farbruße sind nanoteilige Ruße, die durch ihre Feinheit zunehmend den braunen Grundton üblicher Ruße verlieren.

Geeignete bevorzugte Additive E) sind Schmiermittel und Wärmestabilisatoren, aber auch Flammschutzmittel, Lichtschutzmittel (UV-Stabilisatoren, UV-Absorber oder UV-Blocker), Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer etc.

Als Komponente E) können die erfindungsgemäßen Formmassen vorzugsweise 0,01 bis 3 Gew.-%, besonders bevorzugt 0,02 bis 2 Gew.-%, insbesondere 0,05 bis 1,0 Gew.-% mindestens eines Wärmestabilisators, bezogen auf das Gesamtgewichts Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der der Zusammensetzung.

Geeignete Verbindungen E) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolensäure, 4,4`-Bis(α,α-dimethylbenzyl)diphenylamin (Naugard^{®} 445), N,N`-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4`-hydroxy-3`-tert-butylphenyl)-butansäure)-glykolester, 2,1'-Thioethylbis-(3-(3,5-di.tert-butyl-4-hydroxyphenyl)-propionat, 4,4`-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox^{®} PAR24: Handelsprodukt der Firma BASF SE).

Eine bevorzugte Ausführungsform des Wärmestabilisators besteht in der Kombination von organischen Hitzestabilisatoren (insbesondere Hostanox^{®} PAR 24 und Irganox^{®} 1010), einem Bisphenol A basiertem Epoxid (insbesondere Epikote^{®} 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec^{®} NC66 von BASF SE. Insbesondere bevorzugt wird eine Wärmestabilisierung ausschließlich auf Basis von Cul und Kl. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäßen Formmassen enthalten vorzugsweise 0 bis 15 Gew.-%, besonders bevorzugt 0 bis 10 Gew.-%, bezogen auf das Gesamtgewicht der Zusammensetzung, mindestens eines Flammschutzmittels als Additiv E). Wenn die erfindungsgemäßen Formmassen mindestens ein Flammschutzmittel enthalten, so vorzugsweise in einer Menge von 0,01 bis 15 Gew.-%, besonders bevorzugt von 0,1 bis 10 Gew.-%, bezogen auf das Gesamtgewicht der Zusammensetzung. Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP-A-1 095 030), Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

Die Herstellung der Polyamid-Formmassen erfolgt nach an sich bekannten Verfahren. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340°C, besonders bevorzugt von 240 bis 320°C und speziell von 250 bis 300 °C. Dem Fachmann sind die geeigneten Verfahren bekannt.

### Formteile / Formkörper

Des Weiteren betrifft die vorliegende Erfindung Formteile und Formkörper, die unter Verwendung der Polyamid-Formmassen hergestellt werden.

Formkörper sind dabei aus mehreren, d. h. zwei oder mehr Formteilen, insbesondere durch Verschweißen, aufgebaut.

Die Polyamid-Formmassen können zur Herstellung von Formteilen und Formkörpern mittels beliebiger geeigneter Verarbeitungstechniken verwendet werden. Geeignete Verarbeitungstechniken sind insbesondere Spritzgießen, Extrusion, Coextrusion, Tiefziehen oder jede andere bekannte Kunststoff-Formgebungsmethode. Diese und weitere Beispiele sind z. B. in "Einfärben von Kunststoffen", VDI-Verlag, ISBN 3-18-404014-3, zu finden.

Die nach dem erfindungsgemäßen Verfahren erhältlichen Polyamid-Formmassen eignen sich weiter vorteilhaft für eine Verwendung für Automobil-Anwendungen, zur Herstellung von Formteilen für Elektro- und Elektronikbauteilen, speziell auch im Hochtemperaturbereich.

Eine spezielle Ausführungsform sind Formteile oder Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenbereich für A-, B-, C- oder D-Säulenabdeckungen, Spoiler, Türgriffe, Außenspiegelkomponenten, Scheibenwischerkomponenten, Scheibenwischerschutzgehäuse, Ziergitter, Deckleisten, Dachreling, Fensterrahmen, Schiebedachrahmen, Antennenverkleidungen, Vor- und Rückleuchten, Motorabdeckungen, Zylinderkopfhauben, Ansaugrohre, Scheibenwischer sowie Karosserieaußenteile möglich.

Eine weitere spezielle Ausführungsform sind Formteile oder Formkörper als solche oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Für den Küchen- und Haushaltsbereich ist der Einsatz der erfindungsgemäßen Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

Die Herstellung der Polyamid-Zusammensetzung zur Herstellung von Formteilen erfolgt nach an sich bekannten Verfahren. Auf die oben genannten Verfahren zur Herstellung der Polyamid-Zusammensetzung wird hier Bezug genommen. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 340°C, besonders bevorzugt von 240 bis 320°C und speziell von 250 bis 300°C. Es kann vorteilhaft sein, einzelne Komponenten vorzumischen. Es ist weiterhin auch möglich, die Formteile aus einer deutlich unterhalb der Schmelztemperatur des Polyamids hergestellten physikalischen Mischung (dryblend) vorgemischter Komponenten und/oder einzelner Komponenten direkt herzustellen. Die Temperatur beim Mischen beträgt dann vorzugsweise 0 bis 100°C, besonders bevorzugt 10 bis 50°C, insbesondere Umgebungstemperatur (25°C). Die Formmassen können nach üblichen Verfahren, beispielsweise durch Spritzguss oder Extrusion, zu Formteilen verarbeitet werden. Sie eignen sich insbesondere beispielweise für Materialen für Deckel, Gehäuse, Anbauteile, Sensoren beispielsweise für Kfz-, Elektro-, Elektronik-,Telekommunikations-, Informationstechnologie-, Computer-, Haushalts-, Sport-, Medizin- oder Unterhaltungsanwendungen.

Die erfindungsgemäßen Polyamid-Zusammensetzungen eignen sich insbesondere zur Herstellung von schweißbaren Formteilen und geschweißten Formkörpern (aus den schweißbaren Formteilen durch Verschweißen hergestellt). Nach dem Verschweißen weisen die (geschweißten) Formkörper gute mechanische Eigenschaften auf. Insbesondere nach einer Wärmealterung für 2000 Stunden bei 180 °C bleibt die Zugfestigkeit oder Bruchspannung der geschweißten Formkörper weitestgehend erhalten. Die Zugfestigkeit oder Bruchspannung für geschweißte Formkörper sinkt nach einer Wärmebehandlung für 500 Stunden bei 180 °C nur geringfügig. Die Wärmealterung wird dabei analog gängiger Vorgaben aus der Automobilindustrie durchgeführt.

Damit kann durch Einsatz der erfindungsgemäßen Formmassen und insbesondere der Mitverwendung der Copolyamide/Terpolyamide sowie gegebenenfalls Nigrosin und der Polyole die Schweißnaht sowohl initial als auch nach Alterung signifikant verbessert werden. Somit können die Nachteile der in WO 2010/014801 und EP-B-1 060 216 beschriebenen Formmassen für relevante Anwendungen behoben werden. Die aus den erfindungsgemäßen Polyamid-Zusammensetzungen durch Verschweißen mindestens zweier Formteile hergestellten Formkörper zeigen eine verbesserte Schweißnahtfestigkeit vor und nach oxidativer und thermischer Alterung.

Das Verschweißen der Formkörper kann dabei durch beliebige Schweißverfahren erfolgen, beispielsweise durch Reibungsschweißen, Heißgasschweißen oder durch Strahlschweißen, wie Laserdurchstrahlschweißen. Entsprechende Schweißverfahren sind dem Fachmann bekannt und beispielsweise in WO 2013/139802 beschrieben.

Die Erfindung wird durch die nachfolgenden Beispiele näher erläutert.

Die folgenden Einsatzstoffe wurden verwendet:
- A/1:: Polyamid-6: Ultramid^{®} B27 der BASF SE, Schmelzpunkt: 222 °C, Viskositätszahl (0,5 % in 96 % H₂SO₄): 150 cm³/g
Die Viskositätszahlen der Polyamide wurden in Übereinstimmung mit ISO 307 bei 25 °C bestimmt.
- A/2:: Polyamid 6/Polyamid 66-Copolymer, Ultramid^{®} C27 der BASF SE, Schmelzpunkt: 195 bis 197 °C, Viskositätszahl (0,5 % in 96 % H₂SO₄): 145 cm³/g
Die Viskositätszahlen der Polyamide wurden in Übereinstimmung mit ISO 307 bei 25 °C bestimmt.
- B:: Glasfaser: NEG -T249H, Hersteller: Nippon Electric Glass (Malaysia) SDN. BHD., mittlerer Durchmesser: 10,5 µm, Länge: 3 mm
- C:: Nigrosin/Solvent Black 7: Hersteller: Colloids Ltd.
- D/1:: Wärmestabilisator: Cul/KI im Molverhältnis 1 : 4
- D/2:: Dipentaerythrit (CAS: 126-58-9)
- E:: Schmiermittel: EBS, Hersteller: Lonza Cologne GmbH, Ethylenbis(stearylamid) (Distearylethylendiamid) CAS Nr. 110-30-5

Die in der nachstehenden Tabelle 1 angegebenen Inhaltsstoffe wurde in einem Taumelmischer für 10 Minuten vorgemischt und dann über einen Zweiwellenextruder mit Durchmesser 25 mm und einem L/D-Verhältnis von 44 bei 300 °C Zylindertemperatur extrudiert und granuliert. Das naturfarbene Polyamidgranulat wurde hierzu vorher in einem Trockenofen bei 100 °C für vier Stunden getrocknet, so dass der Feuchtigkeitsgehalt bei unter 0,1 % lag. Das erhaltene Granulat wurde auf einer Spritzgussmaschine bei 300 °C Massetemperatur zu 2 mm dicken Plättchen der Dimension 60 x 60 mm verspritzt und sowohl visuell als auch messtechnisch beurteilt. Die mechanischen Eigenschaften wurden gemäß DIN ISO 527 bzw. 179-2/1 eU bzw. 179-2/1 eAf in der 2017 gültigen Fassung bestimmt.

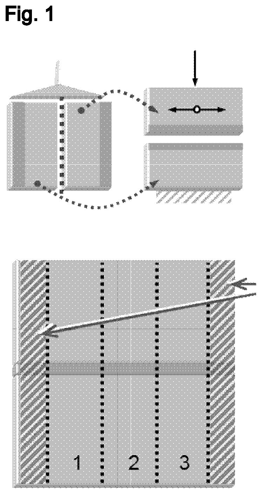

Die Herstellung der geschweißten Formkörper erfolgte wie nachfolgend beschrieben. Hierzu wurden Platten der Größe (110 x 110 x 4) mm³ mittels Spritzguss hergestellt. Die Platten wurden wie in Fig. 1 dargestellt mittig geteilt und versetzt verschweißt. Aus den verschweißten Platten wurden Zugstäbe präpariert, die eine entsprechende zentrale Schweißnaht aufweisen. Der Rand wurde verworfen. Das Vibrationsschweißen wurde mit einer Branson Type-M-102H Maschine (-240 Hz) mit folgenden Parametern durchgeführt:

| Prüfkörper: | |
|---|---|
| Geometrie | Platte (110 mm x 110 mm x 4 mm) |
| Fügefläche, mm² | 440 |
| Konditionierung vor Lagerung | Trocknen 80 °C / 48 h, Vakuum |
| - Prüfung | Trocknen 80 °C / 48 h, Vakuum |

| Schweißversuch: | |
|---|---|
| Methode | linear der Länge nach |
| Fügedruck, Mpa | 1,0 / 2,0 / 4,0 |
| Amplitude, mm | 0,9 |
| Anzahl der Versuche pro Einstellung, mm | 4 |

Der Zugversuch wurde mit einer Zwick Type 1446 Zugmaschine durchgeführt (10 mm/Min, Raumtemperatur).

Die Wärmealterung wurde gemäß typischer Automobilnormendurchgeführt. Hierzu wurde ein Umluft-Ofen entsprechend temperiert. Die Proben wurden vor den jeweiligen Schritten getrocknet bei 80 °C für 48 h unter vermindertem Druck. Danach wurden sie im temperierten Ofen für die angegebene Zeit gelagert.

Fig. 1 zeigt schematisch oben links das Teilen der spritzgegossenen Platte, oben rechts das Verschweißen der beiden Teile und unten das Teilen der geschweißten Platte, um die Prüfkörper 1, 2 und 3 zu erhalten. Der schraffiert gezeigte Randbereich wird verworfen.

**Tabelle 1**

| Beispiel | C1 | C2 | C3 | E1 | E2 |
|---|---|---|---|---|---|
| A/1 (B27) | 69.2 | 49.2 | 67.7 | 46.5 | 47.7 |
| A/2 (C27) | | 20 | | 20 | 20 |
| B (GF) | 30 | 30 | 30 | 30 | 30 |
| D/2 (DiPenta) | | | 1.5 | 3 | 1.5 |
| E (EBS) | 0.2 | 0.2 | 0.2 | 0.2 | 0.2 |
| C (Nigrosin) | 0.3 | 0.3 | 0.3 | 0.3 | 0.3 |
| D/1 (Cul/Kl) | 0.3 | 0.3 | 0.3 | | 0.3 |
| E-Modul [MPa] | 9635 | 9235 | 9540 | 9588 | 9715 |
| Bruchspannung [MPa] | 180 | 173 | 175 | 182 | 172 |
| Bruchdehnung [%] | 4.0 | 4.0 | 3.4 | 3.3 | 3.8 |
| Charpy-Schlagzähigkeit [kJ/m²] | 91 | 97 | 72 | 83 | 90 |
| Erhalt der Bruchspannung bei 180 °C/2000 Stunden [%] | 85 | 84 | 95 | 96 | 98 |
| Bruchspannung bei geschweißtem Formkörper [MPa] | 83 | 86 | 61 | 84 | 85 |
| Bruchspannung bei geschweißtem Formkörper nach Wärmealterung [MPa] | 42 | 39 | 49 | 64 | 65 |
| Erhalt der Bruchspannung bei geschweißtem Formkörper bei 180 °C/500 Stunden [%] | 51 | 45 | 80 | 76 | 77 |
| Kristallisationstemperatur, Beginn [°C] | 184 | 179 | 184 | 178 | 176 |
| Kristallisationstemperatur, Peak [°C] | 167 | 163 | 166 | 160 | 156 |

Vergleichsbeispiel C1 beschreibt eine klassische Formulierung für den Automobilbereich. Vergleichsbeispiel C2 zeigt die Mitverwendung eines Copolyamids. In beiden Fällen ist die Bruchspannung nach Wärmealterung für geschweißte Formkörper unzureichend.

Vergleichsbeispiel C3 betrifft den Einsatz eines mehrwertigen Alkohols in einer Polyamid-Formmasse. Die Bruchspannung bei geschweißtem Formkörper ist unzureichend. Erst durch Kombination des Copolyamids mit dem mehrwertigen Alkohol in den Formmassen wird eine ausreichende Bruchspannung des geschweißten Formkörpers vor und nach Wärmealterung erreicht.

## Patentansprüche

1. Polyamid-Zusammensetzung, enthaltend
a) 30 bis 99,9 Gew.-% einer Polyamid-Mischung als Komponente A) aus aliphatischem Polyamid A1) und aliphatischem Copolyamid A2), wobei das Gewichtsverhältnis von A1) zu A2) 55 : 45 bis 95 : 5 beträgt,
b) 0 bis 60 Gew.-% Glasfasern als Komponente B),
c) 0 bis 2 Gew.-% Nigrosin als Komponente C),
d) 0,1 bis 10 Gew.-% mindestens eines mehrwertigen Alkohols mit mehr als zwei Hydroxylgruppen und einem Zahlenmittel des Molekulargewichts (Mₙ) von weniger als 2000, ausgewählt aus Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2'-Hydroxyethoxy)propan-1,2-diol, 3-(2'-Hydroxypropoxy)propan-1,2-diol, 2-(2'-Hydroxyethoxy)-hexan-1,2-diol, 6-(2'-Hydroxypropoxy)hexan-1,2-diol, 1,1,1-tris-[(2`-Hydroxyethoxy)methyl]ethan, 1,1,1-tris-[(2`-Hydroxypropoxy)methyl]propan, 1,1,1-tris-(4'-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate, Trimethylolpropanpropoxylate, Pentaerythrit, Dipentaerythrit, Tripentaerythrit, Cyclodextrin, D-Mannose, Glucose, Galactose, Sucrose, Fructose, Xylose, Arabinose, D-Mannit, D-Sorbit, D- oder L-Arabit, Xylit, Idit, Talit, Allit, Altrit, Guilit, Erythrit, Threit und D-Gulon-γ-lacton, als Komponente D),
e) 0 bis 20 Gew.-% weitere Zusatzstoffe als Komponente E),
wobei sich die Mengenangaben, deren Summe 100 Gew.-% ergibt, auf die gesamte Zusammensetzung beziehen, das aliphatische Polyamid A1) ausgewählt ist aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und das aliphatische Copolyamid A2) aufgebaut ist aus den Monomeren von zwei oder drei Polyamiden, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

2. Polyamid-Zusammensetzung nach Anspruch 1, **dadurch gekennzeichnet, dass** Komponente D) ausgewählt ist aus: Pentaerythrit, Dipentaerythrit, Tripentaerythrit, Di-Trimethylolpropan, D-Mannit, D-Sorbit und Xylit.

3. Polyamid-Zusammensetzung nach Anspruch 1 oder 2, **dadurch gekennzeichnet, dass** das aliphatische Polyamid A1) ausgewählt ist aus PA 6, PA 66 und Gemischen davon.

4. Polyamid-Zusammensetzung nach einem der Ansprüche 1 bis 3, **dadurch gekennzeichnet, dass** das aliphatische Copolyamid A2) ein PA 6/PA 66-Copolymer ist.

5. Polyamid-Zusammensetzung nach einem der Ansprüche 1 bis 4 **dadurch gekennzeichnet, dass** 0,1 bis 2 Gew.-% Nigrosin als Komponente C) vorliegen.

6. Verfahren zur Herstellung von Polyamid-Zusammensetzungen nach einem der Ansprüche 1 bis 5 durch Vermischen der Inhaltsstoffe unter Erwärmung auf eine Temperatur im Bereich von 160 bis 340 °C.

7. Verwendung einer Polyamid-Zusammensetzung nach einem der Ansprüche 1 bis zur Herstellung von schweißbaren Formteilen oder geschweißten Formkörpern.

8. Schweißbare Formteile oder geschweißte Formkörper aus einer Polyamid-Zusammensetzung nach einem der Ansprüche 1 bis 5.

9. Verwendung von mehrwertigen Alkoholen mit mehr als zwei Hydroxylgruppen und einem Zahlenmittel des Molekulargewichts (Mₙ) von weniger als 2.000 in Polyamid-Zusammensetzungen, die mindestens ein Polyamid, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und mindestens ein Copolyamid, aufgebaut aus den Monomeren von zwei oder drei Polyamiden, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, enthalten, zur Erhöhung der Schweißnahtfestigkeit nach Wärmealterung von durch Verschweißen mindestens zweier Formteile aus der Polyamid-Zusammensetzung hergestellten Formkörpern.

10. Verfahren zur Erhöhung der Schweißnahtfestigkeit nach Wärmealterung von aus Polyamid-Zusammensetzungen, die mindestens ein Polyamid, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212, und mindestens ein Copolyamid, aufgebaut aus den Monomeren von zwei oder drei Polyamiden, ausgewählt aus PA 4, PA 5, PA 6, PA 7, PA8, PA 9, PA 10, PA 11, PA 12, PA46, PA 66, PA 69, PA 610, PA 612, PA 96, PA 99, PA 910, PA 912, PA 1212, enthalten, durch Verschweißen mindestens zweier Formteile hergestellten Formkörpern, bei dem man der Polyamid-Zusammensetzung vor dem Herstellen der Formteile und Formkörper 0,1 bis 10 Gew.-%, bezogen auf die gesamte Polyamid-Zusammensetzung, mindestens eines mehrwertigen Alkohols mit mehr als zwei Hydroxylgruppen und einem Zahlmittel des Molekulargewichts (Mₙ) von weniger als 2000, ausgewählt aus Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2'-Hydroxyethoxy)propan-1,2-diol, 3-(2'-Hydroxypropoxy)propan-1,2-diol, 2-(2'-Hydroxyethoxy)-hexan-1,2-diol, 6-(2'-Hydroxypropoxy)hexan-1,2-diol, 1,1,1-tris-[(2'-Hydroxyethoxy)methyllethan, 1,1,1-tris-[(2'-Hydroxypropoxy)methyl]propan, 1,1,1-tris-(4'-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate, Trimethylolpropanpropoxylate, Pentaerythrit, Dipentaerythrit, Tripentaerythrit, Cyclodextrin, D-Mannose, Glucose, Galactose, Sucrose, Fructose, Xylose, Arabinose, D-Mannit, D-Sorbit, D- oder L-Arabit, Xylit, Idit, Talit, Allit, Altrit, Guilit, Erythrit, Threit und D-Gulon-γ-lacton, zusetzt.

11. Verwendung nach Anspruch 9 oder Verfahren nach Anspruch 10, **dadurch gekennzeichnet, dass** die Polyamid-Zusammensetzung wie in einem der Ansprüche 1 bis 5 definiert aufgebaut ist.

12. Polyamid-Zusammensetzung nach einem der Ansprüche 1 bis 5 oder Verwendung nach Anspruch 9 oder Verfahren nach Anspruch 10, **dadurch gekennzeichnet, dass** der Kristallisationspunkt der Mischung aus dem mindestens einen Polyamid und dem mindestens einen Copolyamid in der Polyamid-Zusammensetzung unter den Kristallisationspunkten des mindestens einen Polyamids und mindestens einen Copolyamids liegt.

## Claims

1. A polyamide composition comprising
a) 30% to 99.9% by weight of a polyamide mixture as component A) composed of aliphatic polyamide A1) and aliphatic copolyamide A2), wherein the weight ratio of A1) to A2) is 55 : 45 to 95 : 5,
b) 0% to 60% by weight of glass fibers as component B),
c) 0% to 2% by weight of nigrosin as component C),
d) 0.1% to 10% by weight of at least one polyhydric alcohol comprising more than two hydroxyl groups and a number-average molecular weight (Mₙ) of less than 2000 selected from glycerol, trimethylolpropane, 2,3-di-(2'-hydroxyethyl)cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)propane-1,2-diol, 2-(2'-hydroxyethoxy)hexane-1,2-diol, 6-(2'-hydroxypropoxy)hexane-1,2-diol, 1,1,1-tris-[(2'-hydroxyethoxy)methyl]ethane, 1,1,1-tris-[(2'-hydroxypropoxy)methyl]propane, 1,1,1-tris-(4'-hydroxyphenyl)ethane, 1,1,1-tris-(hydroxyphenyl)propane, 1,1,3-tris-(dihydroxy-3-methylphenyl)propane, 1,1,4-tris(dihydroxyphenyl)butane, 1,1,5-tris(hydroxyphenyl)-3-methylpentane, di-trimethylolpropane, trimethylolpropane ethoxylates, trimethylolpropane propoxylates, pentaerythritol, dipentaerythritol, tripentaerythritol, cyclodextrin, D-mannose, glucose, galactose, sucrose, fructose, xylose, arabinose, D-mannitol, D-sorbitol, D- or L-arabitol, xylitol, iditol, talitol, allitol, altritol, guilitol, erythritol, threitol and D-gulono-γ-lactone as component D),
e) 0% to 20% by weight of further additives as component E),
wherein the reported amounts summing to 100% by weight are based on the total composition, the aliphatic polyamide A1) is selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212 and the aliphatic copolyamide A2) is constructed from the monomers of two or three polyamides selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

2. The polyamide composition according to claim 1, wherein component D) is selected from: pentaerythritol, dipentaerythritol, tripentaerythritol, di-trimethylolpropane, D-mannitol, D-sorbitol and xylitol.

3. The polyamide composition according to claim 1 or 2, wherein the aliphatic polyamide A1) is selected from PA 6, PA 66 and mixtures thereof.

4. The polyamide composition according to any of claims 1 to 3, wherein the aliphatic copolyamide A2) is a PA 6/ PA 66 copolymer.

5. The polyamide composition according to any of claims 1 to 4, wherein 0.1% to 2% by weight of nigrosin is present as component C).

6. A process for producing polyamide compositions according to any of claims 1 to 5 by mixing the ingredients while heating to a temperature in the range from 160°C to 340°C.

7. The use of a polyamide composition according to any of claims 1 to 5 for producing weldable moldings or welded shaped articles.

8. A weldable molding or welded shaped article composed of a polyamide composition according to any of claims 1 to 5.

9. The use of polyhydric alcohols having more than two hydroxyl groups and a number-average molecular weight (Mₙ) of less than 2000 in polyamide compositions comprising at least one polyamide selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212 and at least one copolyamide constructed from the monomers of two or three polyamides selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212 for increasing weld seam strength after thermal aging of shaped articles produced by welding of at least two moldings composed of the polyamide composition.

10. A process for increasing weld seam strength after thermal aging of shaped articles produced from polyamide compositions comprising at least one polyamide selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212 and at least one copolyamide constructed from the monomers of two or three polyamides selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212 by welding of at least two moldings, wherein before production of the moldings and the shaped article the polyamide composition is admixed with 0.1% to 10% by weight based on the total polyamide composition of at least one polyhydric alcohol having more than two hydroxyl groups and a number-average molecular weight (Mₙ) of less than 2000 selected from glycerol, trimethylolpropane, 2,3-di-(2'-hydroxyethyl)cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)propane-1,2-diol, 2-(2'-hydroxyethoxy)hexane-1,2-diol, 6-(2'-hydroxypropoxy)hexane-1,2-diol, 1,1,1-tris-[(2'-hydroxyethoxy)methyl]ethane, 1,1,1-tris-[(2'-hydroxypropoxy)methyl]propane, 1,1,1-tris-(4'-hydroxyphenyl)ethane, 1,1,1-tris-(hydroxyphenyl)propane, 1,1,3-tris-(dihydroxy-3-methylphenyl)propane, 1,1,4-tris(dihydroxyphenyl)butane, 1,1,5-tris(hydroxyphenyl)-3-methylpentane, di-trimethylolpropane, trimethylolpropane ethoxylates, trimethylolpropane propoxylates, pentaerythritol, dipentaerythritol, tripentaerythritol, cyclodextrin, D-mannose, glucose, galactose, sucrose, fructose, xylose, arabinose, D-mannitol, D-sorbitol, D- or L-arabitol, xylitol, iditol, talitol, allitol, altritol, guilitol, erythritol, threitol and D-gulono-γ-lactone.

11. The use according to claim 9 or the process according to claim 10, wherein the polyamide composition is constructed as defined in any of claims 1 to 5.

12. The polyamide composition as claimed in any of claims 1 to 5 or the use according to claim 9 or the process according to claim 10, wherein the crystallization point of the mixture of the at least one polyamide and the at least one copolyamide in the polyamide composition is below the crystallization points of the at least one polyamide and at least one copolyamide.

## Revendications

1. Composition de polyamide, contenant
a) 30 à 99,9% en poids d'un mélange de polyamide comme composant A), constitué par un polyamide aliphatique A1) et un copolyamide aliphatique A2), le rapport pondéral de A1) à A2) étant de 55:45 à 95:5,
b) 0 à 60% en poids de fibres de verre comme composant B),
c) 0 à 2% en poids de nigrosine comme composant C),
d) 0,1 à 10% en poids d'au moins un alcool polyvalent comprenant plus de deux groupes hydroxyle et présentant une moyenne en nombre du poids moléculaire (Mₙ) inférieure à 2000, choisi parmi le glycérol, le triméthylolpropane, le 2,3-di-(2'-hydroxyéthyl)cyclohexan-1-ol, l'hexane-1,2,6-triol, le 1,1,1-tris(hydroxyméthyl)éthane, le 3-(2'-hydroxyéthoxy)propane-1,2-diol, le 3-(2'-hydroxypropoxy)propane-1,2-diol, le 2-(2'-hydroxyéthoxy)-hexane-1,2-diol, le 6-(2'-hydroxypropoxy)hexane-1,2-diol, le 1,1,1-tris-[(2'-hydroxyéthoxy)méthyl]éthane, le 1,1,1-tris-[(2'-hydroxypropoxy)méthyl]propane, le 1,1,1-tris-(4'-hydroxyphényl)éthane, le 1,1,1-tris-(hydroxyphényl)propane, le 1,1,3-tris-(dihydroxy-3-méthylphényl)propane, le 1,1,4-tris-(dihydroxyphényl)butane, le 1,1,5-tris-(hydroxyphényl)-3-méthylpentane, le ditriméthylolpropane, l'éthoxylate de triméthylolpropane, le propoxylate de triméthylolpropane, le pentaérythritol, le dipentaérythritol, le tripentaérythritol, la cyclodextrine, le D-mannose, le glucose, le galactose, le saccharose, le fructose, le xylose, l'arabinose, le D-mannitol, le D-sorbitol, le D-arabitol ou le L-arabitol, le xylitol, l'iditol, le talitol, l'allitol, l'altritol, le guilitol, l'érythritol, le thréitol et la D-gulone-γ-lactone, comme composant D),
e) 0 à 20% en poids d'autres additifs comme composant E),
les indications de quantité, dont la somme vaut 100% en poids, se rapportant à la composition totale, le polyamide aliphatique A1) étant choisi parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212 et le copolyamide aliphatique A2) étant formé à partir des monomères de deux ou trois polyamides, choisis parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212.

2. Composition de polyamide selon la revendication 1, **caractérisée en ce que** le composant D) est choisi parmi : le pentaérythritol, le dipentaérythritol, le tripentaérythritol, le di-triméthylolpropane, le D-mannitol, le D-sorbitol et le xylitol.

3. Composition de polyamide selon la revendication 1 ou 2, **caractérisée en ce que** le polyamide aliphatique A1) est choisi parmi le PA 6, le PA 66 et leurs mélanges.

4. Composition de polyamide selon l'une quelconque des revendications 1 à 3, **caractérisée en ce que** le copolyamide aliphatique A2) est un copolymère de PA 6/PA 66.

5. Composition de polyamide selon l'une quelconque des revendications 1 à 4, **caractérisée en ce que** 0,1 à 2% en poids de nigrosine sont présents comme composant C).

6. Procédé pour la préparation de compositions de polyamide selon l'une quelconque des revendications 1 à 5 par mélange des constituants tout en chauffant à une température dans la plage de 160 à 340°C.

7. Utilisation d'une composition de polyamide selon l'une quelconque des revendications 1 à 5 pour la préparation de pièces façonnées pouvant être soudées ou de corps façonnés soudés.

8. Pièces façonnées pouvant être soudées ou corps façonnés soudés constitué(e)s par une composition de polyamide selon l'une quelconque des revendications 1 à 5.

9. Utilisation d'alcools polyvalents comprenant plus de deux groupes hydroxyle et présentant une moyenne numérique du poids moléculaire (Mₙ) inférieure à 2000 dans des compositions de polyamide, qui contiennent au moins un polyamide choisi parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212 et au moins un copolyamide constitué par les monomères de deux ou trois polyamides choisis parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212, pour l'augmentation de la résistance d'un joint de soudure après vieillissement thermique de corps façonnés fabriqués par soudage d'au moins deux pièces façonnées constituées par la composition de polyamide.

10. Procédé pour augmenter la résistance d'un joint de soudure après vieillissement thermique de corps façonnés, fabriqués à partir de compositions de polyamide qui contiennent au moins un polyamide choisi parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212 et au moins un copolyamide constitué par les monomères de deux ou trois polyamides choisis parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212, par soudage d'au moins deux pièces façonnées constituées par la composition de polyamide, dans lequel on ajoute, à la composition de polyamide avant la fabrication des pièces façonnées et du corps façonné, 0,1 à 10% en poids, par rapport à la composition totale de polyamide, d'au moins un alcool polyvalent comprenant plus de deux groupes hydroxyle et présentant une moyenne numérique du poids moléculaire (Mₙ) inférieure à 2000, choisi parmi le glycérol, le triméthylolpropane, le 2,3-di-(2'-hydroxyéthyl)cyclohexan-1-ol, l'hexane-1,2,6-triol, le 1,1,1-tris(hydroxyméthyl)éthane, le 3-(2'-hydroxyéthoxy)propane-1,2-diol, le 3-(2'-hydroxypropoxy)propane-1,2-diol, le 2-(2'-hydroxyéthoxy)-hexane-1,2-diol, le 6-(2'-hydroxypropoxy)hexane-1,2-diol, le 1,1,1-tris-[(2'-hydroxyéthoxy)méthyl]éthane, le 1,1,1-tris-[(2'-hydroxypropoxy)méthyl]propane, le 1,1,1-tris-(4'-hydroxyphényl)éthane, le 1,1,1-tris-(hydroxyphényl)propane, le 1,1,3-tris-(dihydroxy-3-méthylphényl)propane, le 1,1,4-tris-(dihydroxyphényl)butane, le 1,1,5-tris-(hydroxyphényl)-3-méthylpentane, le ditriméthylolpropane, l'éthoxylate de triméthylolpropane, le propoxylate de triméthylolpropane, le pentaérythritol, le dipentaérythritol, le tripentaérythritol, la cyclodextrine, le D-mannose, le glucose, le galactose, le saccharose, le fructose, le xylose, l'arabinose, le D-mannitol, le D-sorbitol, le D-arabitol ou le L-arabitol, le xylitol, l'iditol, le talitol, l'allitol, l'altritol, le guilitol, l'érythritol, le thréitol et la D-gulone-γ-lactone.

11. Utilisation selon la revendication 9 ou procédé selon la revendication 10, caractérisé (e) en ce que la composition de polyamide est constituée comme défini dans l'une quelconque des revendications 1 à 5.

12. Composition de polyamide selon l'une quelconque des revendications 1 à 5 ou utilisation selon la revendication 9 ou procédé selon la revendication 10, caractérisé(e) en ce que le point de cristallisation du mélange constitué par ledit au moins un polyamide et ledit au moins un copolyamide dans la composition de polyamide est inférieur aux points de cristallisation dudit au moins un polyamide et dudit au moins un copolyamide.
